# EUROPEAN PATENT APPLICATION

(11) **EP 4 806 301 A1**
(43) Date of publication of application: **16.09.2026**
(21) Application number: 24887999.1
(22) Date of filing: 06.11.2024
(51) Int. Cl.: A47C 27/06

(54) **SPRING MODULE FORMED BY INTERCONNECTED SPRING UNITS, AND ELASTIC CUSHION**

(30) Priority: 07.11.2023 CN 202311474916
(71) Applicant: New-Tec Integration (Xiamen) Co., Ltd., Xiamen, Fujian 361100 (CN)
(72) Inventor: LENG, Luhao, Xiamen, Fujian 361100 (CN)
(74) Representative: Verscht, Thomas Kurt Albert
(86) International application number: PCT/CN2024/130212
(87) International publication number: WO 2025/098388

(57) **Abstract**

The present invention provides a spring unit flexible sleeve connecting structure. Each spring unit consists of at least one spring or a set of springs preloaded and wrapped in a flexible sleeve; connecting parts are provided at a side edge of each flexible sleeve, and a plurality of spring units or a plurality of sets of spring units are interconnected by means of the connecting parts and are constructed to form an elastic core; a connecting part refers to any part on a spring unit except for a force-bearing end thereof, and the any part is spaced apart from the force-bearing end of the spring by at least 1/4 of the length of the spring; the connecting parts are parts of the flexible sleeve or connecting members assembled on the circumferential side of the flexible sleeve; at least one or two layers of the connecting parts are arranged in the height direction of each spring unit; the parts of the plurality of spring units or the plurality of sets of spring units except for the connecting parts are disconnected from and independent of each other.

## Description

### CROSS-REFERENCE TO RELATED APPLICATIONS

This application claims priority to Chinese Patent Application No. 202311474916.6, filed on November 7, 2023, entitled "A Connection Structure for Flexible Sleeves of Spring Units", submitted to the China National Intellectual Property Administration, the content of Chinese Patent Application is incorporated into this application herein by reference.

### FIELD OF THE DISCLOSURE

The present disclosure relates to the technical field of furniture spring pads, and in particular relates to a connection structure for flexible sleeves of spring units.

### BACKGROUND OF THE DISCLOSURE

Large furniture, such as soft cushions and mattresses formed of elastic pads, are indispensable in daily life, conventional elastic pads are generally integrated, non-detachable, and closed integral pads composed of a whole bottom layer, a spring layer, a sponge superposition layer and a closed side enclosure, that is, the spring layer is disposed on the bottom layer, the sponge superposition layer is disposed on the spring layer, and the closed side enclosure is connected between the sponge superposition layer and the bottom layer to form a closed space.

The spring layer is used as a built-in support structure of the mattress and is mainly used to ensure the comfort and softness of the soft cushion, the existing spring layers are all of an integrated structure, in which springs are packed into pockets with non-woven fabric or cotton cloth, and then sealed by adhesive bonding or ultrasonic welding to form a bed net arranged in an array, so as to provide elastic support. This spring structure is designated as individually pocketed springs to avoid mutual influence between two or more people lying on the bed at the same time (for example, if there is a relatively large weight difference between individuals, when one person turns over or moves his/her body, the other will inevitably be affected). However, in the mattress with the individually pocketed springs, non-woven fabrics used for wrapping the pocketed springs adhere to and interact with each other, and when the mattress is squeezed, a plurality of the pocketed springs cannot move up and down completely independently, thereby affecting the comfort of the mattress. Moreover, local collapse of the soft cushion is easily caused by excessive interference during long-term use, which affects user experience and service life of the mattress.

### BRIEF SUMMARY OF THE DISCLOSURE

The main technical problem to be solved by the present disclosure is to provide a connection structure for flexible sleeves of spring units, which ensures independence among various springs and reduces mutual interference among the springs.

In order to solve the aforementioned technical problem, the present disclosure provides a connection structure for flexible sleeves of spring units, the spring units are formed by preloading and wrapping at least one spring or a set of springs in the flexible sleeves; and connection portions are disposed on side edges of the flexible sleeves, and a plurality of or sets of the spring units are connected via the connection portions and configured to form an elastic core;
The connection portions are at least any portion of the spring units other than force-bearing ends thereof, and any portion is spaced apart from the force-bearing ends of the spring units by at least 1/4 of a length of the springs;
The connection portions are a part of the flexible sleeves or connectors assembled on peripheral sides of the flexible sleeves; and at least one layer or two layers of the connection portions is disposed in a height direction of the spring units;
Portions of the plurality of or sets of the spring units1 other than a connection via the connection portions are disconnected and independent from each other.

In a preferred embodiment, relief clearances are disposed at the force-bearing ends of the springs in the spring units or at other portions other than the force-bearing ends;
The plurality of or sets of the spring units are separated and independent via the relief clearances after being connected.

In a preferred embodiment, a plurality of latching members are disposed around the peripheral sides of the flexible sleeves to form the connection portions; the plurality of or sets of the spring units are buckled together via the latching members; and the latching members comprise clips and latches that are latched with each other;
The clips and the latches alternately disposed on each of the flexible sleeves are provided in a circumferential direction.

In a preferred embodiment, two layers of the plurality of latching members are disposed at any portion of the flexible sleeves other than the end portions thereof, and two layers of the connection portions are disposed in the height direction of the spring units at an interval of at least 1/4 of the length of the springs.

The latching members between layers are vertically distributed in one-to-one correspondence on a same axis.

In a preferred embodiment, upper and lower layers of the latching members on the same axis are configured with clips at one layer thereof and latches at the other layer thereof;
Alternatively, the upper and lower layers of the latching members on the same axis are both configured with clips or latches.

In a preferred embodiment, the connection portions are formed by extending from the flexible sleeves or other flexible materials; and at least two latching buckles are disposed on the connection portions;
The plurality of or sets of the spring units are buckled together via the latching buckles.

In a preferred embodiment, two lugs extend from each of the peripheral sides of the flexible sleeves, and the lugs are used as the connection portions;
The at least two latching buckles are disposed on the lugs; and the latching buckles on one of the lugs at least comprise a set of latching buckles capable of being latched with each other.

In a preferred embodiment, the set of latching buckles capable of being latched with each other is disposed on the one of the lugs;
The two lugs on one of the flexible sleeves are respectively latched with two other ones of the flexible sleeves other than itself.

In a preferred embodiment, three latching buckles are disposed on the one of the lugs, two non-adjacent ones of the latching buckles are configured to be latched with each other;
The two lugs on one of the flexible sleeves are latched with corresponding lugs on a same one of other flexible sleeves; a latching member other than the two non-adjacent ones of the latching buckles on a lug of the one of the flexible sleeves is latched with a latching member other than the two non-adjacent ones of the latching buckles on a lug of another of the other flexible sleeves.

In a preferred embodiment, a connector comprise a plurality of latching ports, and one of the connectors forms the connection portions for a plurality of the flexible sleeves via the latching ports; and one of the connectors is used for assembling the plurality of or sets of the spring units to form a module of the spring units, and the plurality of or sets of the modules of the spring units are assembled to form the elastic core.

Compared with the existing techniques, the technical solution of the present disclosure has the following advantages.
1. In the designs of the present disclosure, different from the conventional method using adhesive bonding or ultrasonic welding, the connection structure among the spring units is formed via the connection portions, which are mutually detachable by latching, and the present disclosure converts the original integrated spring module into a separable type and forms a movable detachable type by latching, thus facilitating assembly, transportation, and storage.
2. In the designs of the present disclosure, other portions, other than the connection portions, are disconnected with no connection therebetween, the spring units are partially combined, on the premise of satisfying the layout of the spring module, the individual independence of the spring units is synchronously ensured, mutual involvement caused by the connection between the spring units is reduced, independent up-and-down movement between the spring units is ensured, interference of the spring module is reduced, and the comfort of the spring module is improved.

### BRIEF DESCRIPTION OF THE DRAWING

FIG. 1 illustrates a structural view of a plurality of or sets of spring units connected in a row of Embodiment 1 of the present disclosure;
FIG. 2 illustrates a front view of the plurality of or sets of spring units connected in the row of Embodiment 1 of the present disclosure;
FIG. 3 illustrates a structure of a spring module formed by the plurality of or sets of spring units of Embodiment 1 of the present disclosure;
FIG. 4 illustrates a top view of a connection of the plurality of or sets of spring units in the structure of the spring module of Embodiment 1 of the present disclosure;
FIG. 5 illustrates a front view of a plurality of or sets of spring units connected in a row of Embodiment 2 of the present disclosure;
FIG. 6 illustrates a partial top view of the spring units connected by latching members of Embodiment 2 of the present disclosure;
FIG. 7 illustrates a distribution view of the plurality of or sets of spring units arrayed in multiple rows of Embodiment 2 of the present disclosure;
FIG. 8 illustrates a structure of a spring module formed by the plurality of or sets of spring units of Embodiment 2 of the present disclosure;
FIG. 9 illustrates a front view of a plurality of or sets of spring units connected in a row of Embodiment 3 of the present disclosure;
FIG. 10 illustrates a partial top view of the spring units connected by latching members of Embodiment 3 of the present disclosure;
FIG. 11 illustrates is a distribution view of the plurality of or sets of spring units arrayed in multiple rows of Embodiment 3 of the present disclosure;
FIG. 12 illustrates a structure of a spring module formed by the plurality of or sets of spring units of Embodiment 3 of the present disclosure;
FIG. 13 illustrates a front view of a plurality of or sets of spring units connected in a row of Embodiment 4 of the present disclosure;
FIG. 14 illustrates a top view of a spring module formed by the plurality of or sets of spring units of Embodiment 4 of the present disclosure;
FIG. 15 illustrates a front view of a plurality of or sets of spring units connected in a row of Embodiment 5 of the present disclosure;
FIG. 16 illustrates a perspective view of the plurality of or sets of spring units connected in the row of Embodiment 5 of the present disclosure;
FIG. 17 illustrates a top view of the plurality of or sets of spring units connected in the row of Embodiment 5 of the present disclosure;
FIG. 18 illustrates a top view of a spring module formed by the plurality of or sets of spring units of Embodiment 5 of the present disclosure;
FIG. 19 illustrates a perspective view of the plurality of or sets of spring units in a structure of the spring module of Embodiment 5 of the present disclosure;
FIG. 20 illustrates a front view of a plurality of or sets of spring units connected in a row of Embodiment 6 of the present disclosure;
FIG. 21 illustrates a perspective view of the plurality of or sets of spring units connected in the row of Embodiment 6 of the present disclosure; and
FIG. 22 illustrates a perspective view of a spring module formed by the plurality of or sets of spring units of Embodiment 6 of the present disclosure.

List of reference numerals: spring unit 1; flexible sleeve 2; relief clearance 3; connection portion 4; latching member 41; clip 411; latch 412; latching buckle 42; lug 43; connector 44; and spring module 5.

### DETAILED DESCRIPTION OF THE EMBODIMENTS

The technical solutions in the embodiments of the present disclosure will be clearly and completely described below in combination with the accompanying drawings in the embodiments of the present disclosure; and it is obvious that the described embodiments are only some embodiments of the present disclosure rather than all embodiments, all other embodiments should fall within the protection scope of the present disclosure provided that they are obtained based on the embodiments of the present disclosure by those of ordinary skill in the art without creative efforts.

In the description of the present disclosure, it should be noted that the terms indicating orientation or positional relationship, such as "upper", "lower", "inner", "outer", "top/bottom", are based on the orientation or positional relationship shown in the accompanying drawings, which are merely for convenience of describing the present disclosure and simplifying the description, rather than indicating or implying that the device or element referred to should have a specific orientation, be constructed and operated in the specific orientation, and therefore should not be construed as limiting the present disclosure. In addition, the terms "first" and "second" are only used for description and should not be construed as indicating or implying relative importance.

In the description of the present disclosure, it should be noted that, unless otherwise explicitly specified and limited, the terms such as "mounted", "disposed", "sleeved/socketed", "connected" shall be construed broadly, for example, "connected" can be a wall-mounted connection, a detachable connection, an integral connection, a mechanical connection, an electrical connection, a direct connection, an indirect connection through an intermediate medium, or an internal communication between two elements, and the specific meanings of the terms in the present disclosure can be understood according to specific circumstances by those of ordinary skill in the art.

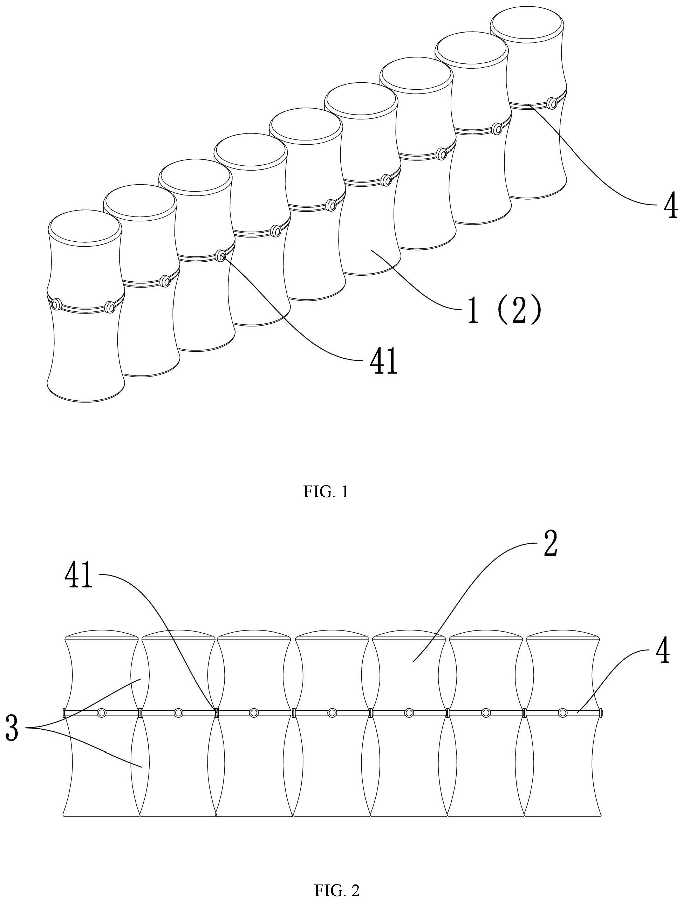

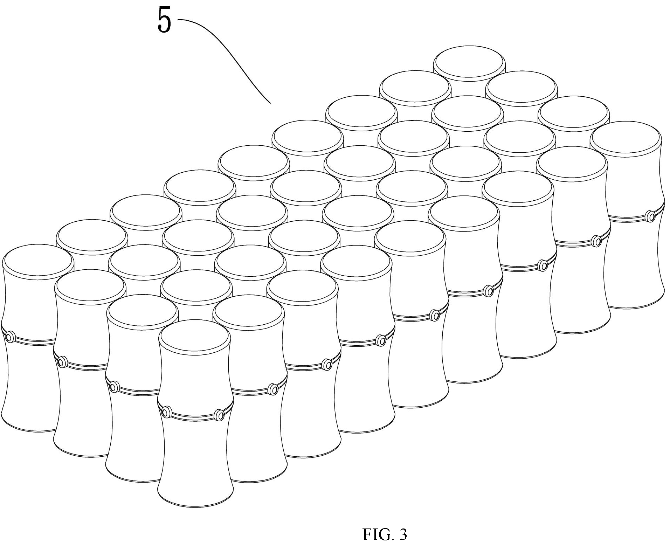

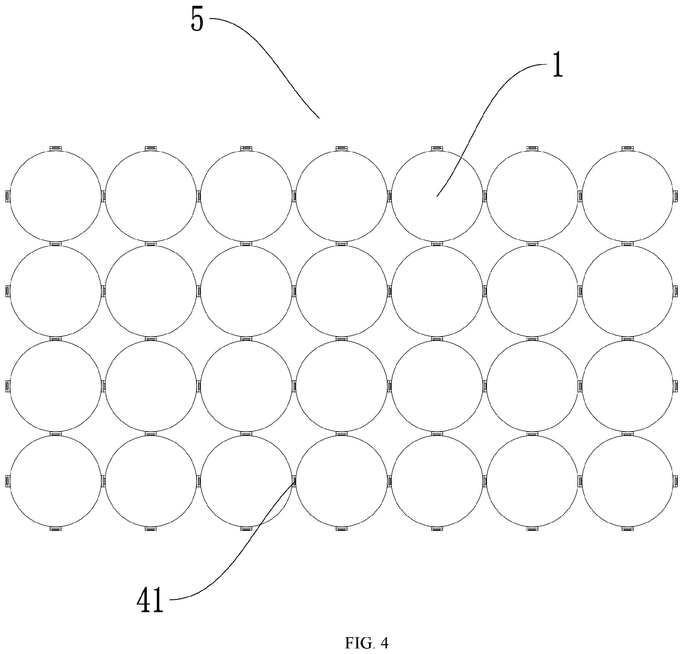

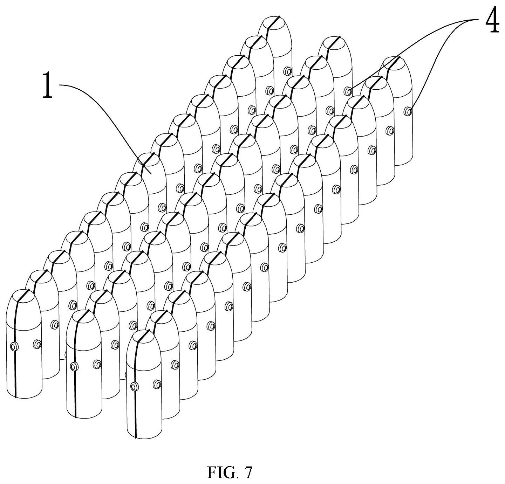

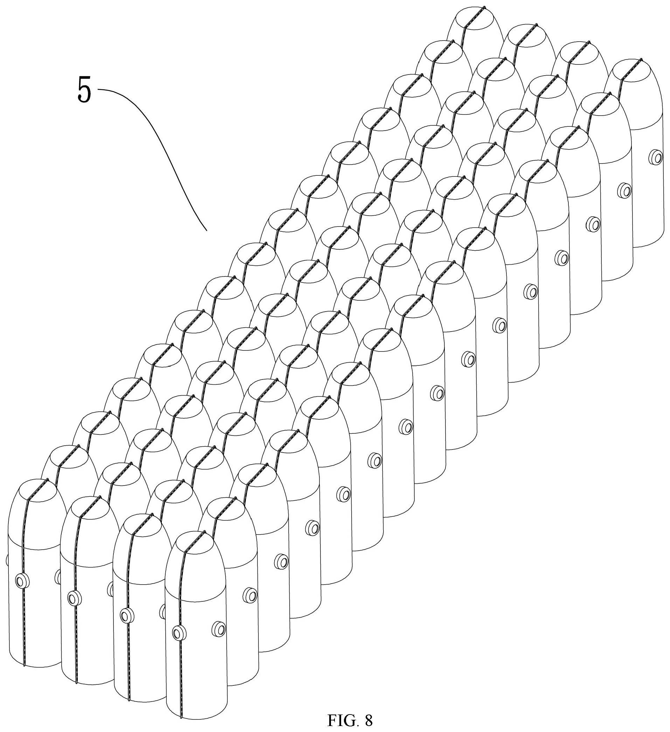

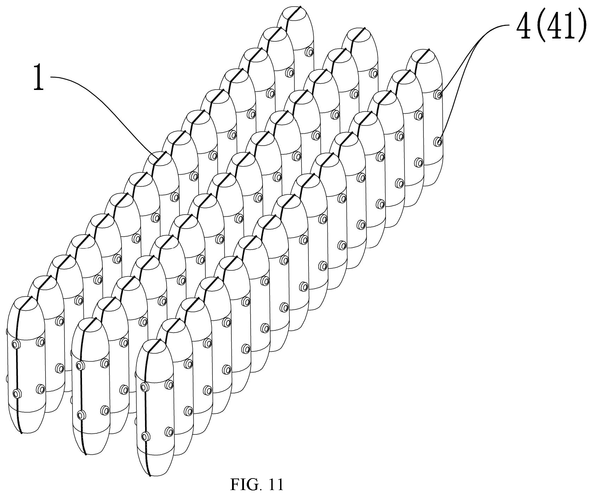

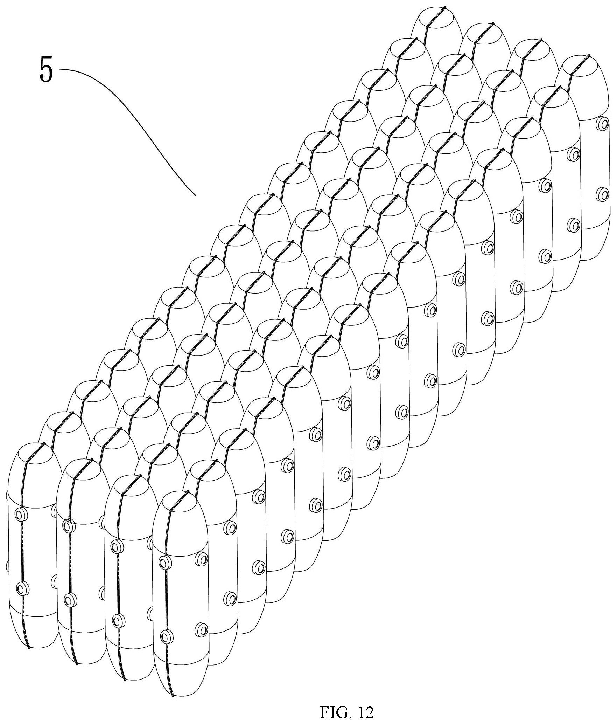

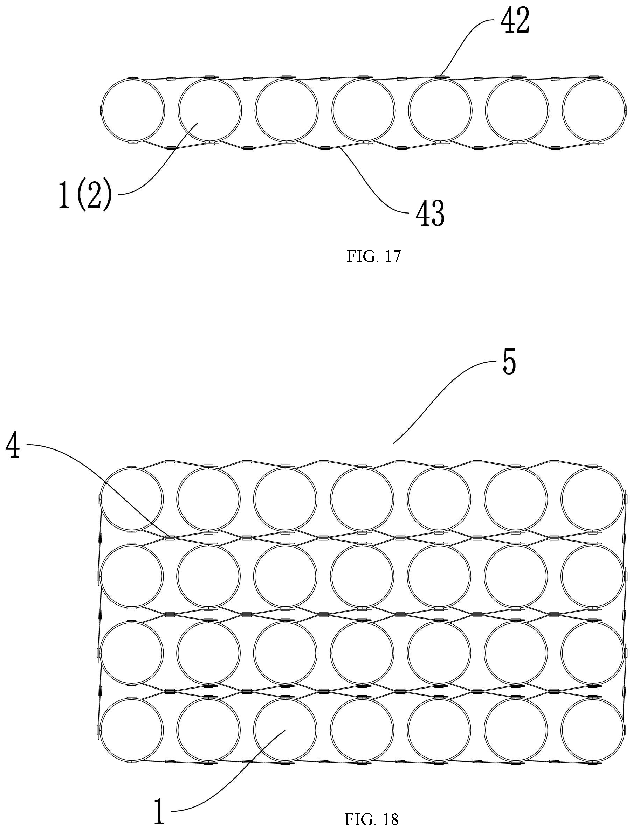

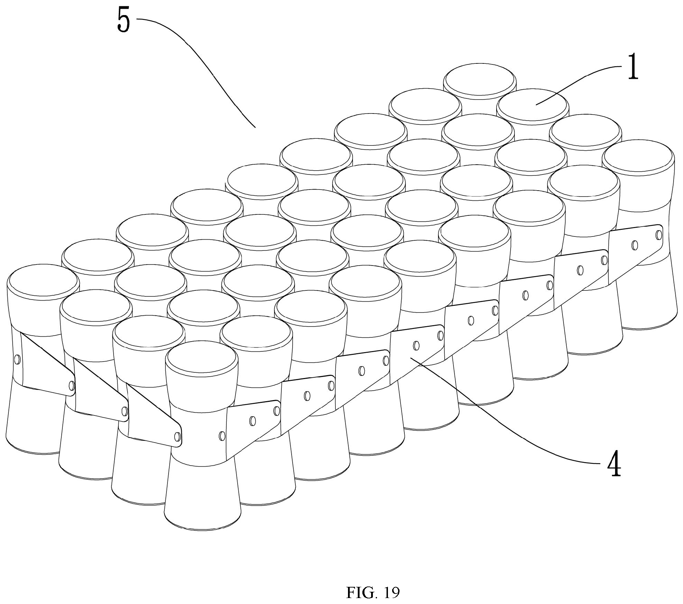

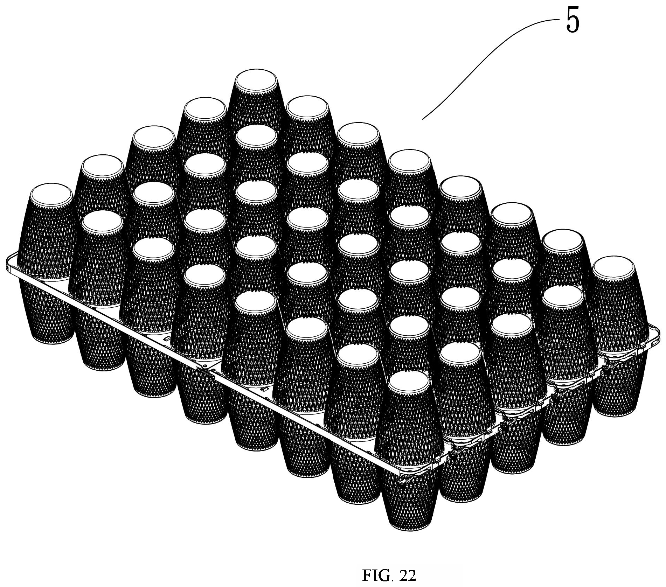

Referring to FIGS. 1-22, this embodiment provides a connection structure for flexible sleeves of spring units 1, the spring units 1 are formed by preloading and wrapping at least one or one set of springs in the flexible sleeves 2, a design of this embodiment lies in that connection portions 4 are disposed on side edges of the flexible sleeves 2, adjacent ones of a plurality of or sets of the spring units 1 are connected via the connection portions 4 to form a spring module, the plurality of or sets of the spring units 1 are latched together via the connection portions 4 disposed on the flexible sleeves 2 to form the complete spring module 5, the connection portions 4 can be parts of the flexible sleeves 2 or connectors 44 assembled on peripheral sides of the flexible sleeves 2, the formed spring module is implemented by latching structures of the connection portions 4, the spring module 5 can be relatively independently disassembled into the plurality of the independent spring units 1, which is more convenient and labor-saving during transportation, storage, assembly or replacement, compared with the existing integrated spring module 5, the spring module 5 improved in this embodiment has a function of dividing a whole into parts.

In this embodiment, the connection structure between the spring units 1 are implemented using the connection portions 4, in order to further reduce interference and influence between the adjacent ones of the springs 1, the connection portions 4 refers to any portion of the spring units 1 other than the force-bearing ends thereof, the any portion is spaced apart from the force-bearing ends of the spring units 1 by at least 1/4 of a length of the springs, and portions of the plurality of or sets of the spring units 1 other than a connection via the connection portions 4 are disconnected and independent from each other.

To better implement an independent up-and-down movement of individuals of the spring units 1, ensure normal elastic forces of the springs, and improve comfort of the spring module 5, relief clearances 3 are disposed at the force-bearing ends of the springs in the spring units 1 or at other portions other than the force-bearing ends, and the plurality of or sets of the spring units 1 are separated and independent via the relief clearances 3 after being connected.

Different from the conventional approach in which adjacent ones of the spring units 1 are closely sealed along the entire side edges by adhesive bonding or ultrasonic welding, in this embodiment, the spring units 1 are connected via the local connection portions 4, thereby ensuring independent movement of the springs, meanwhile, to avoid poor stability of the formed spring module 5 caused by a connection method via the local connection portions 4, preferably, in this embodiment, at least one or two layers of the connection portions 4 are disposed in the height direction of the spring units 1, multiple layers of the connection portions 4 can be disposed according to the height of the springs and requirements of applicable stress scenarios, in this way, the stability and comfort of the spring module 5 are greatly improved due to the latching connection of the assembled spring module 5 via the multiple layers of the connection portions 4.

### Embodiment 1

In Embodiment 1, by way of an example, the spring units 1 use waist-bulged springs (with the middle positions along the height of the springs bulging outward), as shown in FIGS. 1-4.

A plurality of latching members 41 are disposed around the peripheral sides of the flexible sleeves 2 of the waist-bulged springs to form the connection portions 4; the plurality of or sets of the spring units 1 are latched together via the latching members 41; and the latching members 41 are disposed around waist portions of the waist-bulged springs, and adjacent ones of the spring units 1 are latched via waist bulges.

Specifically, the latching members 41 include clips and latches that are latched with each other, one or more of the clips and one or more of the latches are alternately arranged on each of the flexible sleeves 2 in a circumferential direction, two adjacent ones of the spring units are latched by a clip disposed on one thereof and a latch disposed on the other thereof.

The plurality of the spring units 1 are arranged in an array and latched to form the spring module 5.

### Embodiment 2

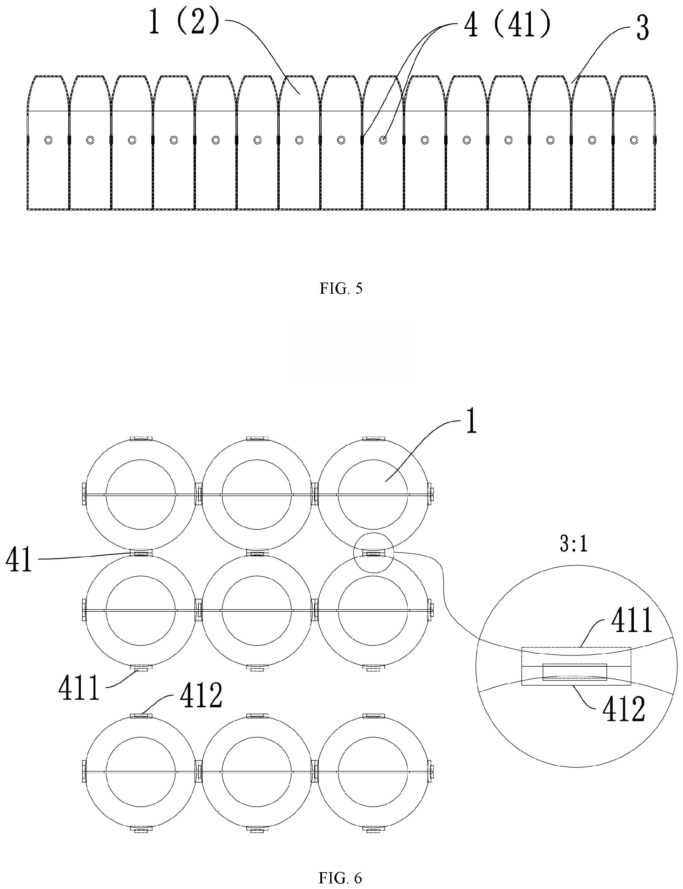

In Embodiment 2, the spring units 1 are cylindrical-tapered springs wrapped in the flexible sleeves 2, and one end of a spring is tapered, as shown in FIGS. 5-8.

A plurality of latching members 41 are disposed around the peripheral sides of the flexible sleeves 2, with the tapered spring disposed at the one end, to form the connection portions 4; the plurality of or sets of the spring units 1 are latched together via the latching members 41; and the latching members 41 are disposed around other cylindrical portions other than the tapered ends, and adjacent ones of the spring units 1 are latched via the cylindrical portions.

In this embodiment, flat portions are used as an arrangement area of the connection portions 4, and an arrangement of at least one layer of the latching members 41 can be disposed around the flat portions to improve a latching stability. The spring units 1 in this embodiment are configured with the tapered spring at the one end and a cylindrical surface at the other end, as an example, one layer of the latching members 41 is disposed, thus providing the latching stability.

Specifically, the latching members 41 include clips 411 and latches 412 that are latched with each other, one or more of the clips 411 and one or more of the latches 412 are alternately arranged on each of the flexible sleeves 2 in a circumferential direction, and two of the spring units are latched by a clip 411 disposed on one thereof and a latch 412 disposed on the other thereof.

The plurality of the spring units 1 are arranged in an array and latched to form the spring module 5.

### Embodiment 3

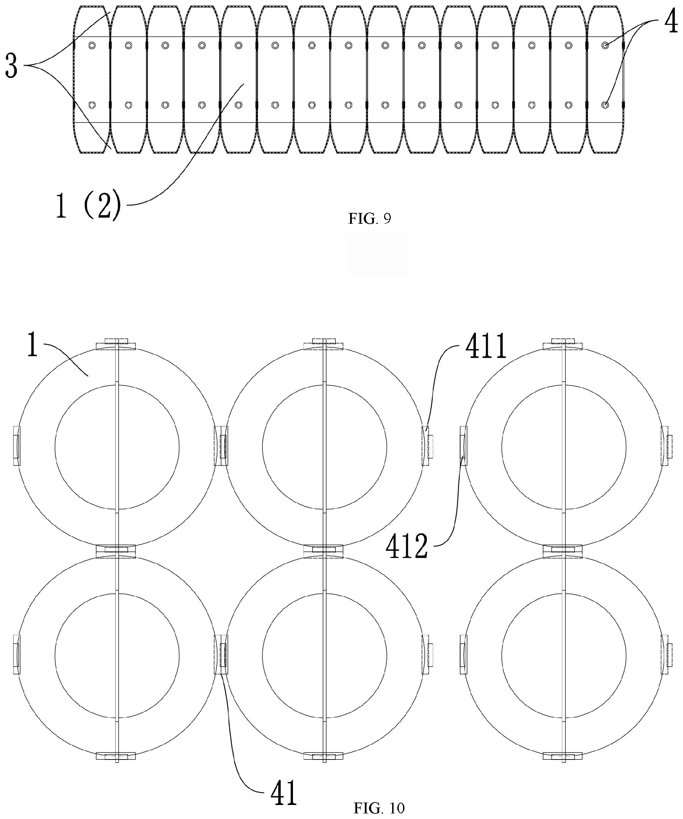

In Embodiment 3, the springs in the spring units 1 are tapered at both ends and cylindrical in the middle portion, as shown in FIGS. 9-12.

A plurality of latching members 41 are disposed around the peripheral sides of the flexible sleeves 2 of the springs, which are tapered at both ends, to form the connection portions 4; the plurality of or sets of the spring units 1 are latched together via the latching members 41; and the latching members 41 are disposed around cylindrical portions other than the tapered ends, and adjacent ones of the spring units 1 are latched via the cylindrical portions.

In this embodiment, the cylindrical portions are used as an arrangement area of the connection portions 4, and an arrangement of at least one layer of the latching members 41 can be disposed around the cylindrical portions to improve a latching stability. As the spring units 1 in this embodiment are configured with tapered springs at both ends, as an example, two layers of the latching members 41 are disposed, thus providing the latching stability.

Specifically, an arrangement of two layers of the plurality of latching members 41 is disposed on any portion of the flexible sleeves 2 other than end portions thereof, and the two layers of the connection portions 4 are disposed in the height direction of the spring units 1 at an interval of at least 1/4 of the length of the springs; and the latching members 41 between layers are vertically distributed in one-to-one correspondence on a same axis.

The latching members 41 include clips 411 and latches 412 that are latched with each other, one or more of the clips 411 and one or more of the latches 412 are alternately arranged on each of the flexible sleeves 2 in a circumferential direction, two of the spring units are latched by a clip 411 disposed on one thereof and a latch 412 disposed on the other thereof.

Upper and lower layers of the latching members 41 on the same axis are configured with clips 411 at one layer thereof and latches 412 at the other layer thereof; alternatively, the upper and lower layers of the latching members 41 on the same axis are both configured with clips 411 or latches 412, and this design is mainly convenient for identifying a latching direction and facilitates assembly of a plurality of parts when the plurality of the spring units 1 are latched.

The plurality of the spring units 1 are arranged in an array and latched to form the spring module 5.

### Embodiment 4

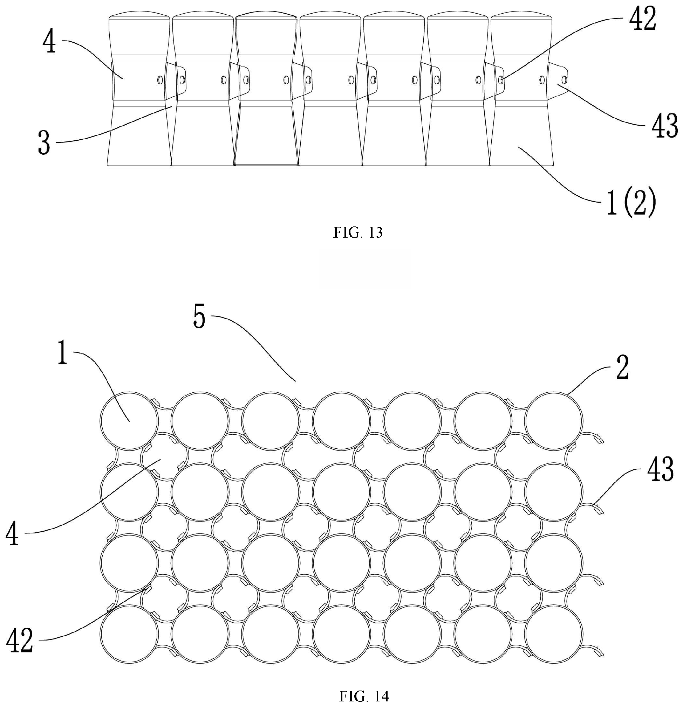

In Embodiment 4, the springs in the spring units 1 are inverted waist-bulged springs (which are concave inward at the middle positions along the height of the springs), as shown in FIGS. 13 and 14.

The connection portions 4 are formed by extending from the flexible sleeves 2 or other flexible materials; and at least two latching buckles 42 are disposed on a connection portion 4, and the plurality of or sets of the spring units 1 are latched together via the latching buckles 42.

As the spring units 1 have the inverted waist-bulged springs and are concave inward at the middle position along the height of the springs, lugs 43 are additionally disposed at the concave portion and extend outward to form latching ends to facilitate latching.

The lugs 43 can be integrally formed with bodies of the flexible sleeves 2 by extending from the bodies of the flexible sleeves 2 or are separated from the flexible sleeves 2 by extending from other external flexible materials, which are latched via the latching members 41 disposed on the flexible sleeves 2.

Specifically, two of the lugs 43 extend from a peripheral side of each of the flexible sleeves 2, and the lugs 43 are used as the connection portions 4; the at least two latching buckles 42 are disposed on a lug 43; and the latching buckles 42 on one of the lugs 43 at least comprise a set of latching buckles 42 capable of being latched with each other.

In this embodiment, the set of latching buckles 42 capable of being latched with each other is disposed on the one of the lugs 43, and the two of the lugs on one of the flexible sleeves 2 are respectively latched with two other ones of the flexible sleeves 2 other than itself. The plurality of or sets of the spring units 1 are latched via the lugs to form a grid-like connection, and the grid-like connection, on the basis of ensuring the stability of the spring module 5, increases elasticity requirements for the connection structure on the connection structure, thereby further reducing interference between the spring units 1.

### Embodiment 5

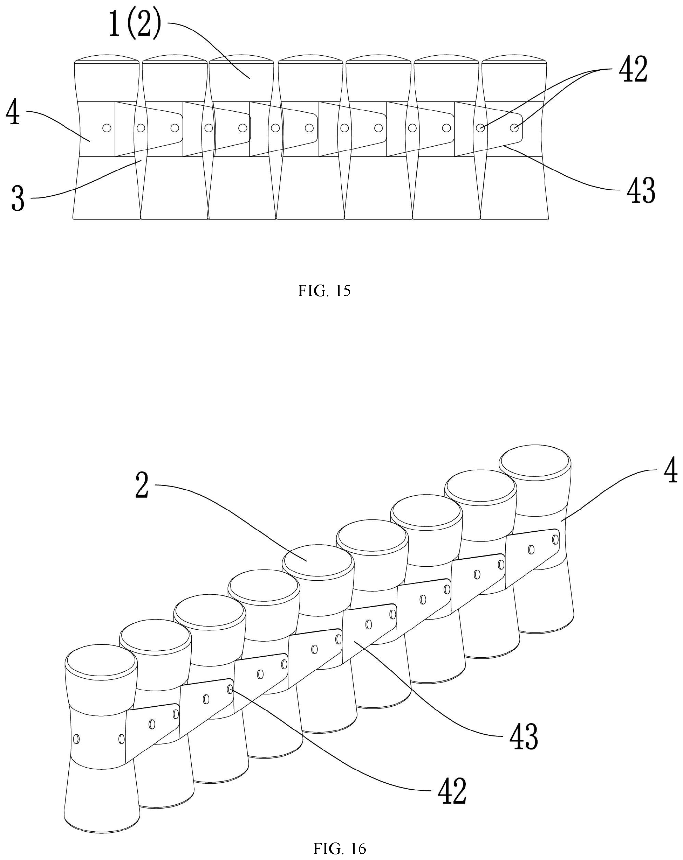

In Embodiment 5, the springs in the spring units 1 are inverted waist-bulged springs (which are concave inward at the middle positions along the height of the springs), as shown in FIGS. 15-19.

The connection portions 4 are formed by extending from the flexible sleeves 2 or other flexible materials; and at least two latching buckles 42 are disposed on a connection portion 4, the plurality of or sets of the spring units 1 are latched together via the latching buckles 42.

As the spring units 1 have the inverted waist-bulged springs and are concave inward at the middle position along the height of the springs, lugs 43 are additionally disposed at the concave portion and extend outward to increase the length of the latching members to facilitate latching.

The lugs 43 can be integrally formed with bodies of the flexible sleeves 2 by extending from the bodies of the flexible sleeves 2 or are separated from the flexible sleeves 2 by extending from other external flexible materials, which are latched via the latching members 41 disposed on the flexible sleeves 2.

Specifically, two of the lugs 43 extend from a peripheral side of each of the flexible sleeves 2, and the lugs 43 are used as the connection portions 4; the at least two latching buckles 42 are disposed on a lug 43; and the latching buckles 42 on one of the lugs 43 at least comprise a set of latching buckles 42 capable of being latched with each other.

In this embodiment, three latching buckles 42 are disposed on one of the lugs 43, in which two non-adjacent ones of the latching buckles 42 can be latched with each other, the two of the lugs on one of the flexible sleeves 2 are latched with corresponding ones of the lugs on a same one of other flexible sleeves 2; and moreover, a latching member other than the two non-adjacent ones of the latching buckles 42 on a lug of the one of the flexible sleeves 2 is latched with a latching member other than the two non-adjacent ones of the latching buckles 42 on a lug of another of the other flexible sleeves 2. the plurality of or sets of the spring units 1 are latched via the lugs to form a grid-like connection, the grid-like connection, on the basis of ensuring the stability of the spring module 5, increases elasticity requirements for the connection structure on the connection structure, thereby further reducing interference between the spring units 1.

### Embodiment 6

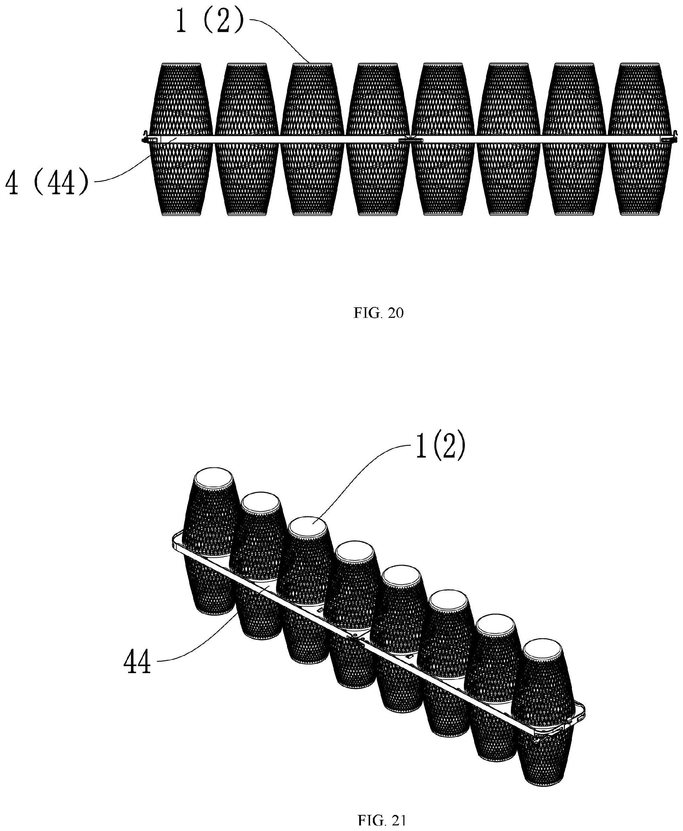

In Embodiment 6, by way of an example, the spring units 1 use waist-bulged springs (with the middle positions along the height of the springs bulging outward), as shown in FIGS. 20-22.

The connection portions 4 are connectors 44 assembled on the peripheral sides of the flexible sleeves 2, and the connection portions 4 are used as third connectors 44 other than the flexible sleeves 2.

The connectors 44 comprise a plurality of latching ports, one of the connectors 44 forms the connection portions 4 for a plurality of the flexible sleeves 2 via the latching ports, the one of the connectors 44 is used for assembling the plurality of or sets of the spring units 1 to form modules of the spring units, and the plurality of sets of the modules of the spring units are assembled to form an elastic core.

The preceding description is only preferred specific embodiments of the present disclosure, but the design and the concept of the present disclosure is not limited thereto, non-substantial modifications of the present disclosure shall fall within the protection scope of the present disclosure provided they are made by utilizing this concept by those of skill in the art within the technical scope disclosed by the present disclosure.

### INDUSTRIAL APPLICABILITY

The present disclosure provides a connection structure for flexible sleeves of spring units, the spring units are formed by preloading and wrapping at least one spring or a set of springs in the flexible sleeves; connection portions are disposed on side edges of the flexible sleeves, and the plurality of or sets of the spring units are connected via the connection portions and configured to form an elastic core; the connection portions are at least any portion of the spring units other than force-bearing ends thereof, and any portion is spaced apart from the force-bearing ends of the spring units by at least 1/4 of a length of the springs; the connection portions are a part of the flexible sleeves or connectors assembled on peripheral sides of the flexible sleeves; at least one layer or two layers of the connection portions is disposed in a height direction of the spring units; and portions of the plurality of or sets of the spring units1 other than a connection via the connection portions are disconnected and independent from each other, which has good industrial applicability.

## Claims

1. A spring module formed by connecting spring units, **characterized in that**: the spring units are formed by preloading and wrapping at least one spring or a set of springs in flexible sleeves; and connection portions are disposed on side edges of the flexible sleeves, and a plurality of or sets of the spring units are connected via the connection portions and configured to form the spring module;
the connection portions are a portion of the spring units other than force-bearing ends thereof, and any portion is spaced apart from the force-bearing ends of the spring units by at least 1/4 of a length of the springs; and
the connection portions are a part of the flexible sleeves or connectors assembled on peripheral sides of the flexible sleeves; and at least one layer of the connection portions is disposed in a height direction of the spring units.

2. The spring module formed by the connecting the spring units according to claim 1, **characterized in that**: force-bearing ends of the springs in the spring units are an upper end surface and a lower end surface of the springs.

3. The spring module formed by the connecting the spring units according to claim 1 or 2, **characterized in that**: a plurality of latching members are disposed around the peripheral sides of the flexible sleeves to form the connection portions; the plurality of or sets of the spring units are buckled together via the latching members; the latching members comprise clips and latches that are latched with each other; and the clips and the latches alternately disposed on each of the flexible sleeves are provided in a circumferential direction.

4. The spring module formed by the connecting the spring units according to claim 3, **characterized in that**: two layers of the plurality of latching members are disposed at any portion of the flexible sleeves other than the end portions thereof, and two layers of the connection portions are disposed in the height direction of the spring units at an interval of at least 1/4 of the length of the springs; and the latching members between layers are vertically distributed in one-to-one correspondence on a same axis.

5. The spring module formed by the connecting the spring units according to claim 4, **characterized in that**: upper and lower layers of the latching members on the same axis are configured with clips at one layer thereof and latches at the other layer thereof; alternatively, the upper and lower layers of the latching members on the same axis are both configured with clips or latches.

6. The spring module formed by the connecting the spring units according to claim 1, **characterized in that**: the connection portions are formed by extending from the flexible sleeves or other flexible materials; at least two latching buckles are disposed on the connection portions; and the plurality of or sets of the spring units are buckled together via the latching buckles.

7. The spring module formed by the connecting the spring units according to claim 6, **characterized in that**: two lugs extend from each of the peripheral sides of the flexible sleeves, and the lugs are used as the connection portions; the at least two latching buckles are disposed on the lugs; and the latching buckles on one of the lugs at least comprise a set of latching buckles capable of being latched with each other.

8. The spring module formed by the connecting the spring units according to claim 7, **characterized in that**: the set of latching buckles capable of being latched with each other is disposed on the one of the lugs; and the two lugs on one of the flexible sleeves are respectively latched with two other ones of the flexible sleeves other than itself.

9. The spring module formed by the connecting the spring units according to claim 7, **characterized in that**: three latching buckles are disposed on the one of the lugs, two non-adjacent ones of the latching buckles are configured to be latched with each other; the two lugs on one of the flexible sleeves are latched with corresponding lugs on a same one of other flexible sleeves; and a latching member other than the two non-adjacent ones of the latching buckles on a lug of the one of the flexible sleeves is latched with a latching member other than the two non-adjacent ones of the latching buckles on a lug of another of the other flexible sleeves.

10. The spring module formed by the connecting the spring units according to claim 1 or 2, **characterized in that**: a connector comprise a plurality of latching ports, and one of the connectors forms the connection portions for a plurality of the flexible sleeves via the latching ports; and one of the connectors is used for assembling the plurality of or sets of the spring units to form a module of the spring units, and the plurality of or sets of the modules of the spring units are assembled to form an elastic pad.
